(19)

Europäisches
Patentamt
European
Patent Office
Office européen
des brevets

(11) **EP 3 872 121 A1**

(12) **EUROPEAN PATENT APPLICATION**

(43) Date of publication:
**01.09.2021 Bulletin 2021/35**

(51) Int Cl.:
**C08J 9/00** *(2006.01)*    **C08K 3/26** *(2006.01)*
**C08K 5/00** *(2006.01)*

(21) Application number: **20160024.4**

(22) Date of filing: **28.02.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Borealis AG
1220 Vienna (AT)**

(72) Inventors:
• **Reichelt, Norbert
  4021 Linz (AT)**
• **Trommsdorff, Ulla
  8057 Zürich (CH)**
• **Tammaro, Daniele
  80056 Ercolano (IT)**

(74) Representative: **Maiwald Patent- und
Rechtsanwaltsgesellschaft mbH
Elisenhof
Elisenstraße 3
80335 München (DE)**

(54) **EXPANDED POLYPROPYLENE BEADS, A PROCESS FOR PRODUCING EXPANDING POLYPROPYLENE BEADS, MOLDED ARTICLES FORMED FROM EXPANDED POLYPROPYLENE BEADS, AND A PROCESS FOR FORMING SUCH MOLDED ARTICLES**

(57)    Expanded polypropylene beads comprising a polypropylene composition (C) having:
a) a melt flow rate ($MFR_2$) in the range from 1.5 to 15.0 g/10 min;
b) a melting temperature (Tm) in the range from 135 to 158 °C; and
c) a loss tangent (tan $\delta$) in the range of 2.00 to 4.00
wherein the polypropylene composition (C) comprises more than 90.0 wt.-%, of a long chain branched copolymer of propylene (c-PP) comprising up to 8.0 wt.-% of comonomer(s) selected from ethylene and $C_4$ to $C_{10}$ alpha olefins,
a method for the preparation of said beads, in addition to a method of forming molded articles from said beads, and the molded articles obtained thereby.

EP 3 872 121 A1

**Description**

The present invention relates to expanded polypropylene beads, a process for producing expanding polypropylene beads, molded articles formed from expanded polypropylene beads, and a process for forming such molded articles.

**Background to the Invention**

Foamed and expanded polyolefins have long been used for applications requiring lightweight materials, with properties such as heat and sound insulation. Amongst the most ubiquitous expanded polyolefins is expanded polystyrene (XPS), typically used for packaging materials. An alternative to XPS is expanded polypropylene (EPP). Expanded polypropylene is a highly versatile foamed material exhibiting excellent energy absoption, impact resistance, water and chemical resistance, exceptionally high strength to weight ratio and 100% recyclability.

The most efficient method for producing expanded polypropylene articles comprises first forming expanded polypropylene beads, which are subsequently molded together to form an article. The typical method for forming said expanded beads involves an autoclave process, which delivers excellent results, however such processes are notoriously expensive and complex. A more economical method involves the formation of the expanded polypropylene beads directly in the extrusion process. Efficient methods have been developed, however beads produced in such processes typically require much more forcing conditions to fuse the beads together when molding foamed articles. Beads formed in the autoclave process typically require steam pressures of 3 to 4 bar in a steam chest molding process, whilst extruded beads typically require steam pressures of 4 to 8 bar. This higher pressure requirement means that only specialized equipment can be used in the molding process, whereas lower pressure steam chest molding equipment is far more prevalent, as it can also be used for fusing XPS beads and autoclave EPP beads.

There is therefore a need for new expanded polypropylene beads being suitable for steam chest molding at lower pressures, in order to enable highly economical manufacture of expanded polypropylene articles.

It is generally held in the field, e.g. in KR 101014002 B1, that the formation of expanded polypropylene beads having multiple melting temperatures is beneficial for the formation of molded articles therefrom.

US 6 315 931 B1 achieves a similar effect by producing foamed particles enclosed in a film, whilst EP 0 778 310 B1 relies on multiple foaming stages.

EP 3 489 287 A1 describes pre-expanded polypropylene beads having low open cell content and beneficial molding properties made by selecting highly specialized polypropylene-based resins following the inequation: tan δ ≤ 0.32 × V + 0.1. Whilst theoretically a promising development, the very strict limitations on the choice of polypropylene-based resins mean that this process is limited in practice.

Further development is necessary to identify suitable expanded polypropylene beads for widespread application.

**Summary of the Invention**

The present invention is based on the finding that by selecting a polypropylene composition having suitable properties, expanded polypropylene beads having beneficially low open cell content and good density can be obtained, whilst most importantly being suitable for the formation of molded articles via a steam chest molding process at a pressure of equal to or less than 4 bar and whilst only requiring short steaming times.

The present invention is directed to expanded propylene beads comprising a polypropylene composition (C) having:

a) a melt flow rate (MFR$_2$), as determined according to ISO 1133 at 230 °C and 2.16 kg load, in the range from 1.5 to 15.0 g/10 min;
b) a melting temperature (Tm), as determined using differential scanning calorimetry according to ISO 11357, in the range from 135 to 158 °C; and
c) a loss tangent (tan δ) at an angular frequency of 0.1 rad/s in dynamic viscoelastic behavior measurement at 200 °C in the range of 2.00 to 4.00

wherein the polypropylene composition (C) comprises more than 90.0 wt.-%, based on the total weight of the polypropylene composition (C), of a long chain branched copolymer of propylene (c-PP) comprising up to 8.0 wt.-% of comonomer(s) selected from ethylene and C$_4$ to C$_{10}$ alpha olefins.

In another aspect, the present invention is directed to a process for producing expanded propylene beads through extrusion of a polypropylene composition (C) using a physical blowing agent, wherein the pressure drop rate, as defined in equation (ii), is greater than or equal to 5000 bar/s:

$$pressure\ drop\ rate\ = \frac{pressure\ drop\ \times\ output\ of\ line}{3600\ \times\ \pi\ \times\ melt\ density\ \times\ \#\ of\ holes\ in\ die\ plate\ \times\ r^2\ \times\ land\ length} \quad \text{(ii)}$$

wherein the pressure drop is expressed in bar,
the output of line is expressed in kg/h,
the melt density is approximated for all samples as 1000 kg/m$^3$,
the radius (r) of the holes in the die plate is expressed in m and
the land length of the holes in the die plate is expressed in m,
and to expanded propylene beads produced through said process.

The present invention is additionally directed to a process for forming molded articles from the expanded polypropylene beads of the present invention, using a steam chest molding process, preferably a pressure fill steam chest molding process, using a steam pressure of equal to or less than 4 bar.

In a further aspect, the present invention is directed to molded articles formed from the expanded polypropylene beads of the present invention, obtained through the process of the present invention, having a density in the range from 25 to 150 g/dm$^3$ and a closed cell content of greater than 80 wt.-%.

The present invention is further directed to the use of a polypropylene composition (C) having:

a) a melt flow rate (MFR$_2$), as determined according to ISO 1133 at 230 °C and 2.16 kg load, in the range from 1.5 to 15.0 g/10 min;
b) a melting temperature (Tm), as determined using differential scanning calorimetry according to ISO 11357, in the range from 135 to 158 °C; and
c) a loss tangent (tan $\delta$) at an angular frequency of 0.1 rad/s in dynamic viscoelastic behavior measurement at 200 °C in the range of 2.00 to 4.00,

wherein the polypropylene composition (C) comprises more than 90.0 wt.-%, based on the total weight of the polypropylene composition (C), of a long chain branched copolymer of propylene (c-PP) comprising up to 8.0 wt.-% of comonomer(s) selected from ethylene and C$_4$ to C$_{10}$ alpha olefins, in an extrusion process using a physical blowing agent, wherein the pressure drop rate, as defined in equation (ii), is greater than or equal to 5000 bar/s:

$$pressure\ drop\ rate\ = \frac{pressure\ drop\ \times\ output\ of\ line}{3600\ \times\ \pi\ \times\ melt\ density\ \times\ \#\ of\ holes\ in\ die\ plate\ \times\ r^2\ \times\ land\ length} \quad \text{(ii)}$$

wherein the pressure drop is expressed in bar,
the output of line is expressed in kg/h,
the melt density is approximated for all samples as 1000 kg/m$^3$,
the radius (r) of the holes in the die plate is expressed in m and
the land length of the holes in the die plate is expressed in m,
for the production of expanded polypropylene beads having a density in the range from 25 to 150 g/dm$^3$ and a closed cell content of greater than or equal to 80%.

Furthermore, the invention is directed to the use of expanded polypropylene beads comprising a polypropylene composition (C) having:

a melt flow rate (MFR$_2$), as determined according to ISO 1133 at 230 °C and 2.16 kg load, in the range from 1.5 to 15.0 g/10 min;
a melting temperature (Tm), as determined using differential scanning calorimetry according to ISO 11357, in the range from 135 to 158 °C; and
a loss tangent (tan $\delta$) at an angular frequency of 0.1 rad/s in dynamic viscoelastic behavior measurement at 200 °C in the range of 1.90 to 4.00;
wherein the polypropylene composition (C) comprises more than 90.0 wt.-%, based on the total weight of the polypropylene composition (C), of a long chain branched copolymer of propylene (c-PP) comprising up to 8.0 wt.-% of comonomer(s) selected from ethylene and C$_4$ to C$_{10}$ alpha olefins,
in a steam chest molding process, preferably a pressure fill steam chest molding process, using a steam pressure or equal to or less than 4 bar,
for the formation of molded articles having a density in the range from 25 to 150 g/dm$^3$ and a closed cell content of greater than or equal to 80%.

**Definitions**

An active foam nucleating agent is a foam nucleating agent that further comprises a chemical blowing agent, thus having a dual effect of bubble formation and crystal nucleation. These may be organic (for example azodicarbonamide) or inorganic (for example Hydrocerol type) nucleating agents, though can sometimes additionally comprise particulate co-nucleating agents.

Expanded polypropylene beads are particles of polypropylene obtained by a so-called "pressure-release expansion method (from a high pressure condition to a low pressure condition to expand particles)" in which a volatile foaming agent is dissolved in the polypropylene at high pressure, followed by a reduction in pressure resulting in the volatile foaming agent either chemically producing gas, or simply boiling, forming gas bubbles (or cells) within the polypropylene matrix.

A coherent part is defined as a homogenous-foamed bead molded article with a smooth surface. The EPP part has well defined corners and edges and consists of interconnected EPP beads. The surface of the part can be manually scratched using a pen without releasing individual beads. Less than 5% of individual beads fall out of the mold when it is opened after steaming and cooling

Particulate inorganic cell nucleating agents

Inorganic cell nucleating agents are insoluble in polyolefin compositions, and thus are present in particulate form, as opposed to organic cell nucleating agents, which are partially soluble in polyolefin compositions under specific conditions. A typical inorganic cell nucleating agent would be talc or mica.

Organic nucleating agents are partially soluble in polyolefin compositions and nucleate crystal growth. Typically, they are not considered as particulate nucleation agents in contrast to talc or mica.

**Detailed Description of the Invention**

**Polypropylene composition (C)**

An essential feature of the present invention is the selection of a suitable polypropylene composition for the formation of expanded polypropylene beads. As such, the expanded polypropylene beads of the present invention comprise a polypropylene composition (C) having specific properties.

The polypropylene composition (C) of the present invention has a melt flow rate ($MFR_2$), as determined according to ISO 1133 at 230 °C and 2.16 kg load, in the range from 1.5 to 15.0 g/10 min, more preferably in the range from 1.8 to 10.0 g/10 min, most preferably in the range from 2.0 to 8.0 g/10 min.

The polypropylene composition (C) of the present invention has a melting temperature (Tm), as determined using differential scanning calorimetry according to ISO 11357, in the range from 135 to 155 °C, more preferably in the range from 138 to 152 °C, most preferably in the range from 140 to 150 °C.

In contrast to the generally accepted understanding in the field, it is not required that two separate melting temperatures are observed, rather it is preferred that only a single melting temperature is exhibited by the expanded polypropylene beads.

The polypropylene composition (C) of the present invention has a loss tangent (tan $\delta$) at an angular frequency of 0.1 rad/s in dynamic viscoelastic behavior measurement at 200 °C in the range of 2.00 to 4.00, more preferably in the range from 2.10 to 3.50, most preferably in the range from 2.20 to 3.00.

The polypropylene composition (C) of the present invention preferably has a maximum force at break (Fmax), as determined in a Rheotens test according to ISO 16790, in the range from 20 to 100 cN, more preferably in the range from 22 to 70 cN, most preferably in the range from 24 to 40 cN.

The polypropylene composition (C) of the present invention preferably has a maximum velocity at break (Vmax), as determined in a Rheotens test according to ISO 16790, in the range from 180 to 500 mm/s, more preferably in the range from 200 to 500 mm/s, most preferably in the range from 220 to 300 mm/s.

The polypropylene composition (C) of the present invention preferably has a foamability parameter (FP), as defined in equation (i), in the range from 300 to 1700,

$$FP = MFR_2 \times Fmax \times (Tm - 135) \quad (i)$$

wherein the melt flow rate ($MFR_2$) is determined according to ISO 1133 at 230 °C and 2.16 kg load and expressed in g/10 min,
the melting temperature (Tm) is determined using differential scanning calorimetry according to ISO 11357 and expressed in °C,
and a maximum force at break (Fmax) is determined in a Rheotens test according to ISO 16790 and expressed in cN.

More preferably, the foamability parameter is in the range from 400 to 1700, yet more preferably in the range from 450 to 1650, and most preferably in the range from 490 to 1600.

As such, the polypropylene composition of the present invention has:

a) a melt flow rate (MFR$_2$), as determined according to ISO 1133 at 230 °C and 2.16 kg load, in the range from 1.5 to 15.0 g/10 min, more preferably in the range from 1.8 to 10.0 g/10 min, most preferably in the range from 2.0 to 8.0 g/10 min;
b) a melting temperature (Tm), as determined using differential scanning calorimetry according to ISO 11357, in the range from 135 to 155 °C, more preferably in the range from 138 to 152 °C, most preferably in the range from 140 to 150 °C; and
c) a loss tangent (tan $\delta$) at an angular frequency of 0.1 rad/s in dynamic viscoelastic behavior measurement at 200 °C in the range of 2.00 to 4.00, more preferably in the range from 2.10 to 3.50, most preferably in the range from 2.20 to 3.00.

In addition, the polypropylene composition of the present invention preferably has one or more, preferably all, of the following properties:

a) a maximum force at break (Fmax), as determined in a Rheotens test according to ISO 16790, in the range from 20 to 100 cN, more preferably in the range from 22 to 70 cN, most preferably in the range from 24 to 40 cN;
b) a maximum velocity at break (Vmax), as determined in a Rheotens test according to ISO 16790, in the range from 180 to 500 mm/s, more preferably in the range from 200 to 500 mm/s, most preferably in the range from 220 to 300 mm/s; and
c) a foamability parameter (FP), as defined in equation (i), in the range from 450 to 1700, more preferably in the range from 470 to 1650, most preferably in the range from 490 to 1600.

The polypropylene composition (C) of the present invention comprises more than 90.0 wt.-%, based on the total weight of the polypropylene composition (C), of a long chain branched copolymer of propylene (c-PP).
The long chain branched copolymer (c-PP) of the present invention comprises up to 8.0 wt.-% of comonomer(s) selected from ethylene and C$_4$ to C$_{10}$ alpha olefins.

Preferably the long chain branched copolymer (c-PP) of the present invention comprises in the range from 0.5 to 8.0 wt.-%, more preferably in the range from 1.0 to 7.0 wt.-%, yet more preferably in the range from 2.0 to 6.0 wt.-%, most preferably in the range from 3.0 to 5.0 wt.-% of comonomer(s) selected from ethylene and C$_4$ to C$_{10}$ alpha olefins.

The comonomer(s) of the long chain branched copolymer (c-PP) are selected from ethylene and C$_4$ to C$_{10}$ alpha olefins, more preferably ethylene. In a particularly preferred embodiment, ethylene is the only comonomer present in the long chain branched copolymer (c-PP).

The long chain branched copolymer (c-PP) of the present invention preferably has a branching index g' of less than 0.95, more preferably of less than 0.90, most preferably of less than 0.85. The branching index g' is typically not lower than 0.50.

When seeking to produce expanded polypropylene beads, it is customary to use a cell nucleating agent, in order to promote the formation of regularly sized cells. Typical cell nucleating agents are talc, calcium carbonate and cellulose powder.

It is a finding of the present invention that particulate inorganic cell nucleating agents are detrimental to the formation of closed cells in the context of the present invention.

As such, it is preferred that the polypropylene composition (C) comprises less than 0.20 wt.-%, based on the total weight of the polypropylene composition (C), of talc, more preferably less than 0.10 wt.-% of talc, most preferably the polypropylene composition (C) should be free from talc.

It is further preferred that the polypropylene composition (C) comprises less than 0.20 wt.-%, based on the total weight of the polypropylene composition (C), of particulate inorganic cell nucleating agents, more preferably less than 0.10 wt.-% of particulate inorganic cell nucleating agents, most preferably the polypropylene composition (C) should be free from all particulate inorganic cell nucleating agents.

In order to promote cell nucleation it is beneficial to use an active cell nucleating agent.

As such, it is preferred that the polypropylene composition (C) comprises from 0.01 to 0.30 wt.-%, based on the total weight of the polypropylene composition (C), of an active cell nucleating agent, more preferably from 0.05 to 0.25 wt.-%, most preferably from 0.10 to 0.20 wt.-%.

It is particularly preferred that the active cell nucleating agent is an organic active foam nucleating agent.

It is therefore preferred that the polypropylene composition (C) comprises from 0.01 to 0.30 wt.-%, based on the total weight of the polypropylene composition (C), of an organic active foam nucleating agent, more preferably from 0.05 to 0.25 wt.-%, most preferably from 0.10 to 0.20 wt.-%

It is further preferred that the polypropylene composition (C) comprises from 0.01 to 0.30 wt.-%, based on the total weight of the polypropylene composition (C), of Hydrocerol, more preferably from 0.05 to 0.25 wt.-%, most preferably from 0.10 to 0.20 wt.-%.

### Expanded polypropylene beads

The expanded polypropylene beads of the present invention comprise polypropylene composition (C).

It is preferred that the expanded polypropylene beads have a density in the range from 25 to 150 g/dm$^3$, more preferably in the range from 25 to 100 g/dm$^3$, most preferably in the range from 25 to 80 g/dm$^3$.

The expanded polypropylene beads of the present invention preferably have a closed cell content of greater than or equal to 80%, more preferably greater than or equal to 85%, most preferably greater than or equal to 90%.

It is further preferred that the expanded polypropylene beads according to the present invention have a melt flow rate (MFR$_2$), as determined according to ISO 1133 at 230 °C and 2.16 kg load on shredded samples of molded articles formed from said beads, in the range from 3.0 to 20.0 g/10 min, more preferably in the range from 3.0 to 15.0 g/10 min, most preferably in the range from 3.5 to 10.0 g/10 min.

### Process for producing expanded polypropylene beads

The present invention is also directed to a process for the production of expanded polypropylene beads.

It is a finding of the present invention that the production of expanded polypropylene beads through extrusion of a polypropylene composition using a physical blowing agent having suitable characteristics for the formation of molded articles via steam chest molding may be dependent on a number of process parameters.

In particular, it was found that the pressure drop rate (PDR) of the polypropylene composition upon exiting the die plate was a key determining factor.

Therefore, the process for producing expanded polypropylene beads through extrusion of a polypropylene composition using a physical blow agent has a pressure drop rate, as defined in equation (ii), is greater than or equal to 5000 bar/s:

$$pressure\ drop\ rate = \frac{pressure\ drop \times output\ of\ line}{3600 \times \pi \times melt\ density \times \#\ of\ holes\ in\ die\ plate \times r^2 \times land\ length} \quad (ii)$$

wherein the pressure drop is expressed in bar,
the output of line is expressed in kg/h,
the melt density is approximated for all samples as 1000 kg/m$^3$,
the radius (r) of the holes in the die plate is expressed in m and
the land length of the holes in the die plate is expressed in m.

The maximum pressure drop rate is typically 20000 bar/s.

It is preferred that the pressure drop rate, as defined in equation (ii) is in the range from 5000 to 20000 bar/s.

The process for producing expanded polypropylene beads through extrusion of a polypropylene composition uses a physical blowing agent. This physical blowing agent is preferably selected from isobutane and carbon dioxide, more preferably isobutane.

The requirement for a physical blowing agent does not mean that chemical blowing agents, such as those present in an active foam nucleating agent, cannot also be present.

The process for producing expanded polypropylene beads through extrusion of a polypropylene composition using a physical blowing agent is preferably carried out using:

a) a single or twin screw melt extruder wherein the energy uptake of the extruder is less than 0.1 kwh/kg;
b) a static or dynamic cooling equipment;
c) a multi-hole die plate; and
d) an underwater pelletizing system.

The energy uptake of the extruder is defined as the energy of the main drive engine without heating and/or cooling energy.

It is preferred that the polypropylene composition used extruded using a blowing agent according to the process of the invention is the polypropylene composition (C) as defined above.

The present invention is furthermore directed to expanded polypropylene beads as described in the previous sections that have been obtained by the process as defined in the present section.

**Molded articles and use**

Another aspect of the present invention is the use of the expanded polypropylene beads for the formation of molded articles.

The process for forming molded articles according to the present invention involves using a steam chest molding process using steam pressure of equal to or less than 4 bar, more preferably equal to or less than 3.8 bar, most preferably equal to or less than 3.5 bar to bond the beads into a coherent part.

It is preferred that the steaming time of the steam chest molding process is less than 30 s, more preferably less than 25 s, yet more preferably less than 20 s, still more preferably less than 15 s, even more preferably less than 10 s, most preferably less than 6 s.

It is further preferred that the steam chest molding process is a pressure fill steam chest molding process using a steam pressure and optionally steaming time as given above.

The present invention is furthermore directed to molded articles formed from the expanded polypropylene beads as described in the previous sections.

The present invention is directed yet further to expanded polypropylene beads as described in the previous sections, which after subjection to the steam chest molding process as defined in the present section form a coherent part The molded articles of the present invention have a density in the range from 25 to 150 g/dm$^3$, more preferably from 25 to 140 g/dm$^3$, most preferably from 25 to 130 g/dm$^3$.

The molded articles of the present invention have a closed cell content of greater than or equal to 80 wt.-%, more preferably greater than or equal to 85%, most preferably greater than or equal to 90%.

The molded articles of the present invention preferably have a melt flow rate (MFR$_2$), as determined according to ISO 1133 at 230 °C and 2.16 kg load on shredded samples of the molded article, in the range from 3.0 to 20.0 g/10 min, more preferably in the range from 3.0 to 15.0 g/10 min, most preferably in the range from 3.5 to 10.0 g/10 min.

It is preferred that the molded articles of the present invention are obtained using the process of steam chest molding, preferably a pressure fill steam chest molding process, at a pressure of equal to or less than 4 bar as described above.

The present invention is further directed to the use of a polypropylene composition (C) having:

a) a melt flow rate (MFR$_2$), as determined according to ISO 1133 at 230 °C and 2.16 kg load, in the range from 1.5 to 15.0 g/10 min;
b) a melting temperature (Tm), as determined using differential scanning calorimetry according to ISO 11357, in the range from 135 to 158 °C; and
c) a loss tangent (tan $\delta$) at an angular frequency of 0.1 rad/s in dynamic viscoelastic behavior measurement at 200 °C in the range of 2.00 to 4.00;

wherein the polypropylene composition (C) comprises more than 90.0 wt.-%, based on the total weight of the polypropylene composition (C), of a long chain branched copolymer of propylene (c-PP) comprising up to 8.0 wt.-% of comonomer(s) selected from ethylene and C$_4$ to C$_{10}$ alpha olefins,
in an extrusion process using a physical blowing agent, wherein the pressure drop rate, as defined in equation (ii), is greater than or equal to 5000 bar/s,
for the production of expanded polypropylene beads having a density in the range from 25 to 150 g/dm$^3$ and a closed cell content of greater than or equal to 80%.

The present invention is also directed to the use of expanded polypropylene beads comprising a polypropylene composition (C) having:

a) a melt flow rate (MFR$_2$), as determined according to ISO 1133 at 230 °C and 2.16 kg load, in the range from 1.5 to 15.0 g/10 min;
b) a melting temperature (Tm), as determined using differential scanning calorimetry according to ISO 11357, in the range from 135 to 158 °C; and
c) a loss tangent (tan $\delta$) at an angular frequency of 0.1 rad/s in dynamic viscoelastic behavior measurement at 200 °C in the range of 2.00 to 4.00;

wherein the polypropylene composition (C) comprises more than 90.0 wt.-%, based on the total weight of the polypropylene composition (C), of a long chain branched copolymer of propylene (c-PP) comprising up to 8.0 wt.-% of comonomer(s) selected from ethylene and $C_4$ to $C_{10}$ alpha olefins,
in a steam chest molding process, preferably a pressure fill steam chest molding process, using a steam pressure or equal to or less than 4 bar,
for the formation of molded articles having a density in the range from 25 to 150 $g/dm^3$ and a closed cell content of greater than or equal to 80%.

All preferable ranges disclosed for the polypropylene composition (C) and the expanded polypropylene beads, as well as the process for producing polypropylene beads using a physical blowing agent and the process for forming molded articles comprising the expanded polypropylene beads are also applicable for the uses as described above.

**EXAMPLES**

**1. Definitions/Determination Methods:**

**Melt Flow Rate**

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The $MFR_2$ of polypropylene is determined at a temperature of 230 °C and a load of 2.16 kg.

**Differential scanning calorimetry (DSC)**

Differential scanning calorimetry (DSC) analysis, melting temperature ($T_m$) and melt enthalpy ($H_m$), crystallization temperature ($T_c$), and heat of crystallization ($H_c$, $H_{CR}$) are measured with a TA Instrument Q200 differential scanning calorimetry (DSC) on 5 to 7 mg samples. DSC is run according to ISO 11357 / part 3 /method C2 in a heat / cool / heat cycle with a scan rate of 10 °C/min in the temperature range of -30 to +225 °C. Crystallization temperature ($T_c$) and heat of crystallization ($H_c$) are determined from the cooling step, while melting temperature ($T_m$) and melt enthalpy (Hm) are determined from the second heating step.

**Density**

The density has been measured according to the Archimedes principle through determining mass (m) and volume (V) of the specimen and calculating its density *(d)* accordingly *(d=m/V)* In a measuring cylinder containing water at 23°C, about 500 mL (weight W1) of PP beads which have been allowed to stand at 23°C under 50 % relative humidity for 48 hours are immersed using a wire net. From the rise of the water level, the apparent volume V1 (L) is determined. The apparent density is obtained by dividing the weight W1 (g) of PP beads (b) by the apparent volume V1 ($cm^3$)

$$\text{Density} = W1/V1$$

**Rheotens test (Fmax and Vmax)**

The test described herein follows ISO 16790:2005.
The strain hardening behaviour is determined by the method as described in the article " Rheotens-Mastercurves and Drawability of Polymer Melts", M. H. Wagner, Polymer Engineering and Sience, Vol. 36, pages 925 to 935 . The content of the document is included by reference. The strain hardening behaviour of polymers is analysed by Rheotens apparatus (product of Göttfert, Siemensstr.2, 74711 Buchen, Germany) in which a melt strand is elongated by drawing down with a defined acceleration.
The Rheotens experiment simulates industrial spinning and extrusion processes. In principle a melt is pressed or extruded through a round die and the resulting strand is hauled off. The stress on the extrudate is recorded, as a function of melt properties and measuring parameters (especially the ratio between output and haul-off speed, practically a measure for the extension rate). For the results presented below, the materials were extruded with a lab extruder HAAKE Polylab system and a gear pump with cylindrical die (L/D = 6.0/2.0 mm). The gear pump was pre-adjusted to a throughput of 2.1 g/min with pressure before the gear pump of 30 bar, and the melt temperature was set to 200 °C. The spinline length between die and Rheotens wheels was 100 mm. At the beginning of the experiment, the take-up speed of the Rheotens wheels was adjusted to the velocity of the extruded polymer strand (tensile force zero): Then the experiment was started by slowly increasing the take-up speed of the Rheotens wheels until the polymer filament breaks.

The acceleration of the wheels was small enough so that the tensile force was measured under quasisteady conditions. The acceleration of the melt strand (2) drawn down is 120 mm/s2 . The Rheotens was operated in combination with the PC program EXTENS. This is a real-time data-acquisition program, which displays and stores the measured data of tensile force and drawdown speed. The end points of the Rheotens curve (force versus pulley rotary speed) is taken as the Fmax and Vmax.

**Comonomer content:**

Quantitative nuclear-magnetic resonance (NMR) spectroscopy was used to quantify the comonomer content of the polymers. Quantitative $^{13}C\{^1H\}$ NMR spectra were recorded in the solution-state using a Bruker Advance III 400 NMR spectrometer operating at 400.15 and 100.62 MHz for $^1H$ and $^{13}C$ respectively. All spectra were recorded using a $^{13}C$ optimised 10 mm extended temperature probehead at 125°C using nitrogen gas for all pneumatics.

Approximately 200 mg of material was dissolved in 3 ml of 1,2-tetrachloroethane-d2 (TCE-d2) along with chromium-(III)-acetylacetonate (Cr(acac)3) resulting in a 65 mM solution of relaxation agent in solvent (Singh, G., Kothari, A., Gupta, V., Polymer Testing 28 5 (2009), 475). To ensure a homogenous solution, after initial sample preparation in a heat block, the NMR tube was further heated in a rotary oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 1 128). A total of 6144 (6k) transients were acquired per spectra.

Quantitative $^{13}C\{^1H\}$ NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed (Cheng, H. N., Macromolecules 17 (1984), 1950).

The comonomer fraction was quantified using the method of Wang et. al. (Wang, W.J., Zhu, S., Macromolecules 33 (2000), 1 157) through integration of multiple signals across the whole spectral region in the 13C spectra. This method was chosen for its robust nature and ability to account for the presence of regio-defects when needed. Integral regions were slightly adjusted to increase applicability across the whole range of encountered comonomer contents. For systems where only isolated ethylene in PPEPP sequences was observed the method of Wang et. al. was modified to reduce the influence of non-zero integrals of sites that are known to not be present. This approach reduced the overestimation of ethylene content for such systems and was achieved by reduction of the number of sites used to determine the absolute ethylene content to:

$$E = 0.5(S\beta\beta + S\beta\gamma + S\beta\delta + 0.5(S\alpha\beta + S\alpha\gamma))$$

Through the use of this set of sites the corresponding integral equation becomes:

$$E = 0.5(IH + IG + 0.5(IC + ID))$$

using the same notation used in the article of Wang et. al. (Wang, W-J., Zhu, S., Macromolecules 33 (2000), 1 157). Equations used for absolute propylene content were not modified. The mole percent comonomer incorporation was calculated from the mole fraction:

$$E \,[\text{mol}\%] = 100 * fE$$

The weight percent comonomer incorporation was calculated from the mole fraction:

$$E \,[\text{wt}\%] = 100 * (fE * 28.06) / ((fE * 28.06) + ((1 - fE) * 42.08))$$

**Branching index g':**

The branching index g' is defined as g' = [IV]br/[IV]lin, in which g' is the branching index, [IV]br is the intrinsic viscosity of the branched polypropylene as measured in decalin at 135°C and [IV]lin is the intrinsic viscosity of the linear polypropylene having the same weight average molecular weight (within a range of $\pm$ 10 %) as the branched polypropylene, calculated based on size exclusion chromatography (SEC) in trichlorobenzene at 140°C. Thereby, a low g'-value is an indicator for a high branched polymer. In other words, if the g'-value decreases, the branching of the polypropylene increases. Reference is made in this context to B.H. Zimm and W.H. Stockmeyer, J. Chem. Phys. 17,1301 (1949).

**Loss tangent tan $\delta$**

A polypropylene-based resin was heat-pressed for 5 minutes at 190°C with use of a spacer having a thickness of 1.5 mm so as to prepare a pressed plate having a thickness of 1.5 mm, and a test piece was punched out from the pressed plate with use of a $\phi$25 mm punch. As a measurement device, a viscoelastic measuring device ARES manufactured by TA Instruments was used. A $\phi$25 mm parallel plate type jig was attached to the viscoelastic measuring device. A constant temperature bath was arranged so as to surround the jig, and the constant temperature bath was kept heated at 200°C so that the jig was preheated. Subsequently, the constant temperature bath was opened, and the $\phi$25 mm test piece was inserted between parallel plates. The constant temperature bath was then closed, and the test piece was preheated for 5 minutes. Thereafter, a gap between the parallel plates was narrowed to 1 mm so that the test piece was compressed. After compression, the constant temperature bath was opened again, and a resin which protruded from the parallel plates was removed with use of a brass spatula. The constant temperature bath was closed, and the constant temperature bath was kept heated for 5 minutes. After that, measurement of dynamic viscoelastic behavior was started. The measurement was carried out at an angular frequency in a range of 0.1 rad/s to 100 rad/s. A storage modulus of elasticity and a loss modulus of elasticity at each angular frequency were obtained, and a loss tangent tan $\delta$ at the each angular frequency was obtained as a calculated value. Out of those results, a value of a loss tangent tan $\delta$ at an angular frequency of 0.1 rad/s was employed. Note that the measurement was carried out with a strain amount of 5% under a nitrogen atmosphere.

**Calculation of the pressure drop rate:**

Pressure drop rate in bar/s is calculated from the pressure tested during operation in front of die plate (bar), the output of the extruder in kg/h, an assumed density of 1000 kg/m$^3$, the number of holes of die plate, the radius of the holes and land length of die, both in m.

$$pressure\ drop\ rate\ = \frac{pressure\ drop\ \times\ output\ of\ line}{3600\ \times\ \pi\ \times\ melt\ density\ \times\ \#\ of\ holes\ in\ die\ plate\ \times\ r^2\ \times\ lend\ length}$$

**Open cell test of EPP beads**

The open cell content of EPP beads from extrusion process was determined according ISO 4590 method 1 using an automatic gas pycnomter (Quantachrom Ultapyc 1200e). Test was conducted on 4 g beads using the 50 cm$^3$ test cell at 20°C using Helium as gas with 20 mbar pressure. EPP beads have been treated 12 h at 60°C under a vacuum of 500 mbar for removal of blowing agent and conditioned for 24 h at 20 °C and 50 % air humidity in front of the pycnometer test procedure.

Evaluation of foamed bead moldability:

**Molding trials of EPP beads:**

EPP beads by were molded into test specimen using a Teubert TransTec72/52 using a two different metal molds a) 280*195*22 mm for tensile tests and b) 280*195*50 mm for compression tests.
Two filling technologies for the molds have be tested a) crack fill and b) pressure fill.
Using crack fill, the EPP beads were conveyed by a low silo pressure while the tool remained slightly open (crack position). Compression of the beads was achieved by closing the crack mechanically. The ratio of change of bead height by closing the mold to initial height is reported as compression in %.
In pressure fill mode, the EPP beads were conveyed using a higher pressure against a pressure (2.5 bar) in the chest (back-pressure).

In evaluation of expanded bead moldability in table 3, the molding steam pressure and time was optimised until a homogenous-expanded bead molded article with a smooth surface was obtained. The preferred filling technology was pressure fill, which was tested for EPP beads of IE1 and all comparative examples. Crack fill was only tested for the EPP beads were pressure fill did not lead to homogeneous molded article.

The molded product was then aged in an oven at 80°C for 12 hours to obtain a PP bead molding sample.

**Compression test of molded EPP sample:**

The compression stress at 50% strain of the foamed bead molded article is a value obtained by using a universal test machine Zwick 1485. A specimen 50 mm long, 50 mm wide and 30 mm high was cut out of each expansion-molded article sample, and this specimen was used to conduct a test under conditions of a specimen temperature of 23 °C and a rate of loading of 3 mm/min in accordance with ISO 844, there by preparing a stress-strain diagram at the time a load was applied to the specimen on the basis of the test data. Compression at the time of 50% strain was found from this diagram and regarded as the compression stress of the expansion-molded article sample.

Three repetitions of the test have been made and the average values are reported in table 4.

**Elongation at break:**

The elongation at break of the expanded beads molded articles was measured according to the method specified in DIN ISO 1789. More specifically, a test piece having a size of 155 x 25 x 10 mm test specimen type A (surfaces are all cut surfaces) cut out from the expanded beads molded article by water jet was measured by an autograph device (manufactured by Zwick model Z 1485) with a span between fulcrums of 55 mm and a test speed of 500 mm/min.

**Melt flow rate of polymer in EPP bead:**

EPP beads have been treated 12 h at 60 °C under a vacuum of 500 mbar for removal of blowing agent and conditioned for 24 h at 20 °C and 50 % air humidity in front of this test procedure.
10 g EPP beads were compression molded at 220 °C into a 1 mm solid plaque using a heated hot press. This solid polymer plaque was shredded into 1-2 mm pieces before testing the melt flow rate 230 °C/2.16kg.

**2. Experimental section:**

Representative procedure for preparation of the inventive polypropylene beads:

The EPP foam line used comprises a combination of dosing devices, an intermeshing corotating twin screw extruder, a melt conditioning section including melt cooler and an underwater pelletizer.
The foam line used in this work is a twin-screw extruder based extrusion foaming line from Sulzer Ltd. It comprises a 45 mm and L/D=42 twin-screw extruder with 6 gravimetric feeders and a gas dosing station capable of feeding 3 different blowing agents, a type 425 'Torpedo' melt cooler, an SMB Plus DN40 static mixer and die plate. The blowing agent(s) can be added in the extruder. The extruder has heating elements and a water-cooling system controlled by a proprietary algorithm, in order to maintain constant and even temperature distribution throughout the housings and the melt. The impregnated melt is transferred into a conditioning section mainly consisting of a heat exchanger that allows for even temperature control throughout the melt. The polymer melt is then volumetrically dosed by a gear pump and optionally passes through a sieve before entering the diverter valve. The gear pump is used to ensure a constant melt flow and pressure for pelletization, which is done by underwater pelletization. The temperature of melt cooler, gear pump, filter, diverter valve and die of the pilot plant is controlled by three independent thermal oil heat transfer units (HTU).
PP3 (Daploy™ WB260HMS) and 0.15 wt.-% Hydrocerol CF20 are dosed separately by gravimetric feeders into the twin screw foaming extruder at 20 kg/h. Isobutane is injected directly into the extruder via an injection valve. Melt temperature is adjusted to 133°C by melt cooler and the temperature at the die plate is adjusted to 142°C. A high PDR die plate, having 12 channels, each having a diameter of 1.1 mm and a land length of 5.0 mm was used to achieve a PDR of greater than 5000 bar/s.

Preparation of the comparative polypropylene beads:

The comparative beads were prepared analogously to the inventive beads using the conditions as given in Table 2, using the polypropylenes as described in Table 1. Example IE2 demonstrates that carbon dioxide may also be employed in the process of the present invention as an alternative to isobutane.

**Table 1:** Properties of HMS-PP used for inventive and comparative examples

| HMS-PP | $MFR_2$ | C(C2) | g' | Fmax | Vmax | Tm | Tc | Tan $\delta$ | FP |
|---|---|---|---|---|---|---|---|---|---|
| PP1 | 1.9 | 3.9 | 1.0 | 9 | 165 | 141 | 97 | 4.7 | 103 |
| PP2 | 2.3 | 0 | 0.82 | 32 | 250 | 160 | 131 | 1.37 | 1840 |
| PP3 | 2.0 | 3.9 | 0.79 | 25 | 250 | 145 | 117 | 2.5 | 500 |
| PP4 | 6.0 | 3.9 | 0.84 | 25 | 250 | 145 | 117 | 2.12 | 1500 |

**PP1** is RB501BF, commercially available from Borealis AG.
**PP2** is Daploy™ WB140HMS, commercially available from Borealis AG.
**PP3** is Daploy™ WB260HMS, commercially available from Borealis AG.
**PP4** is a high melt flow rate variant of Daploy™ WB260HMS, produced according to the method of EP 1 853 426 B1.

**Table 2:** Process conditions for the formation of expanded polypropylene beads.

| Example | HMS-PP | PDR (bar/s) | Die plate | isoButane (wt-.%) | Output (kg/h) | Melt cooler temp (°C) | Oil tool temp (°C) | Die plate temp (°C) | Pressure at die (bar) | Energy consumption (kWh/kg) | Bulk density (g/dm$^3$) | Open cell content (%) |
|---|---|---|---|---|---|---|---|---|---|---|---|---|
| CE1 | PP1 | 2949 | B | 8 | 10 | 140 | 200 | 142 | 88 | 0.13 | 210 | 78 |
| CE2 | PP2 | 13647 | A | 7 | 20 | 120 | 250 | 135 | 140 | 0.1 | 65 | 23 |
| CE3 | PP2 | 1462 | A | 8 | 5 | 140 | 250 | 142 | 60 | 0.1 | 70 | 71 |
| IE1 | PP3 | 10236 | A | 7.4 | 20 | 130 | 200 | 142 | 105 | 0.09 | 68 | 9 |
| CE4 | PP3 | 2027 | B | 8 | 10 | 130 | 210 | 137 | 88 | 0.09 | 55 | 45 |
| IE2 | PP4 | 8050 | B | 3* | 20 | 140 | 210 | 165 | 200 | 0.1 | 44 | 10 |

Die plate A has 12 channels, each having a diameter of 1.1 mm and a land length of 5.0 mm.
Die plate B has 12 channels, each having a diameter of 1.8 mm and a land length of 5.0 mm.
*carbon dioxide was used in place of isobutane for IE2.

EP 3 872 121 A1

Formation of articles from the inventive expanded polypropylene beads:

The beads formed in Table 2 were used in the formation of molded articles, either through pressure filling (as described in the methods section), or through crack filling when pressure filling was unable to provide a coherent part using a maximum steam pressure of 4,8 bar and maximum steaming time of 15 sec per side.
The conditions for the formation of these articles are given in Table 3, whilst the properties of the articles thus obtained are given in Table 4.

**Table 3:** Process conditions for forming expanded polypropylene articles.

| Example | Molding method | Steam left | Steam right | Autoclave steam | Cooling | Final density |
|---------|----------------|------------|-------------|-----------------|---------|---------------|
| CE2a | Pressure fill | 4.8 bar / 15 s | 4.8 bar / 15 s | 4.8 bar / 15 s | 10 s / 60 °C | No coherent part |
| CE2b | Crack fill 20% | 4.8 bar / 15 s | 4.8 bar / 15 s | 4.8 bar / 15 s | 10 s / 60 °C | 110 |
| IE1 | Pressure fill | 3.2 bar / 4 s | 3.2 bar / 4 s | 3.2 bar / 4 s | 10 s / 60 °C | 105 |
| CE4 | Crack fill 20% | 3.2 bar / 4 s | 3.2 bar / 4 s | 3.2 bar / 4 s | 10 s / 60 °C | 100 |

**Table 4:** Properties of the formed expanded polypropylene articles

| Example | Open cell content (%) | Compression strength 25% | Compression strength 50% | Elongation at break | Final MFR$_2$ |
|---------|-----------------------|--------------------------|--------------------------|---------------------|---------------|
| CE2b | 23 | 590 | 850 | 5 | 7 |
| IE1 | 9 | 300 | 470 | 15 | 6 |
| CE4 | 45 | 180 | 240 | 5 | 4 |

As it can be seen from Table 3, beads produced in CE1, CE2 and CE3 did not form a coherent part using the pressure fill technique applying maximal back pressure of 2.5 bar using steam pressure up to 4.8 bar and steaming time up to 15 seconds. A crack filling method and steam pressure > 4 bar are required to form a coherent part from CE2. Similarly, the beads of CE4 required a crack filling method due to their high open cell content, whereas the inventive beads of IE1 as suitable for pressure filling method and can be processed using steam with pressure < 4 bar.
The data in Table 4 demonstrates that the foamed articles formed from the comparative EPP beads have not only an undesirable higher open cell content, but also much lower elongation at break. The article of CE4 has inferior compression strength at both 25% strain and 50%. Whilst CE2b does exhibit good compression strength, the high open cell count will impact the insulation properties and the requirement for a crack filling steam chest method with long steaming times limits production of the molded articles.

**Claims**

1. Expanded polypropylene beads comprising a polypropylene composition (C) having:

   a) a melt flow rate (MFR$_2$), as determined according to ISO 1133 at 230 °C and 2.16 kg load, in the range from 1.5 to 15.0 g/10 min;
   b) a melting temperature (Tm), as determined using differential scanning calorimetry according to ISO 11357, in the range from 135 to 158 °C; and
   c) a loss tangent (tan $\delta$) at an angular frequency of 0.1 rad/s in dynamic viscoelastic behavior measurement at 200 °C in the range of 2.00 to 4.00

   wherein the polypropylene composition (C) comprises more than 90.0 wt.-%, based on the total weight of the polypropylene composition (C), of a long chain branched copolymer of propylene (c-PP) comprising up to 8.0 wt.-% of comonomer(s) selected from ethylene and C$_4$ to C$_{10}$ alpha olefins.

2. The expanded polypropylene beads according to claim 1, wherein the polypropylene composition (C) has:

   a) a maximum force at break (Fmax), as determined in a Rheotens test according to ISO 16790, in the range from 20 to 100 cN;
b) a maximum velocity at break (Vmax), as determined in a Rheotens test according to ISO 16790, in the range from 180 to 500 mm/s; and/or
c) a foamability parameter (FP), as defined in equation (i), in the range from 300 to 1700,

$$FP = MFR_2 \times Fmax \times (Tm - 135) \quad (i)$$

wherein the melt flow rate (MFR$_2$) is determined according to ISO 1133 at 230 °C and 2.16 kg load and expressed in g/10 min,
the melting temperature (Tm) is determined using differential scanning calorimetry according to ISO 11357 and expressed in °C, and
the maximum force at break (Fmax) is determined in a Rheotens test according to ISO 16790 and expressed in cN.

3. The expanded polypropylene beads according to either of claims 1 or 2, wherein the long chain branched copolymer of propylene (c-PP) has a branching index g' of less than 0.95.

4. The expanded polypropylene beads according to any one of the preceding claims, wherein the polypropylene composition (C) comprises less than 0.3 wt.-% of a particulate inorganic cell nucleating agents.

5. The expanded polypropylene beads according to any one of the preceding claims, wherein the polypropylene composition (C) comprises from 0.01 to 0.3 wt.-% of an active foam nucleating agent, preferably Hydrocerol.

6. The expanded polypropylene beads according to any one of the preceding claims, having a density in the range from 25 to 150 g/dm$^3$ and a closed cell content of greater than or equal to 80%.

7. A process for producing expanded polypropylene beads through extrusion of a polypropylene composition (C) using a physical blowing agent, wherein the pressure drop rate, as defined in equation (ii), is greater than or equal to 5000 bar/s:

$$pressure\ drop\ rate = \frac{pressure\ drop \times output\ of\ line}{3600 \times \pi \times melt\ density \times \#\ of\ holes\ in\ die\ plate \times r^2 \times land\ length} \quad (ii)$$

wherein the pressure drop is expressed in bar,
the output of line is expressed in kg/h,
the melt density is approximated for all samples as 1000 kg/m$^3$,
the radius (r) of the holes in the die plate is expressed in m and
the land length of the holes in the die plate is expressed in m.

8. The process according to claim 7, wherein the physical blowing agent is selected from isobutane and carbon dioxide.

9. The process according to either of claims 7 or 8, wherein the extrusion is carried out using a device comprising:

a) a single or twin screw melt extruder wherein the energy uptake of the extruder is less than 0.1 kwh/kg;
b) a static or dynamic cooling equipment;
c) a multi-hole die plate; and
d) an underwater pelletizing system.

10. The process according to any one of claims 7 to 9, wherein the polypropylene composition (C) has the properties as defined in any one of claims 1 to 5.

11. Expanded polypropylene beads according to any one of claims 1 to 6, obtained by the process according to any one of claims 7 to 10.

12. A process for forming molded articles from the expanded polypropylene beads according to any one of claims 1 to 6 or 11 or obtained by the process of any one of claims 7 to 10, using a steam chest molding process, preferably a pressure fill steam chest molding process, using a steam pressure of equal to or less than 4 bar to form the beads into a coherent part.

13. The process according to claim 12, wherein the steaming time is less than 30 s.

14. The expanded polypropylene beads according to any one of claims 1 to 6 or 11, or obtained by the process of any one of claims 7 to 10, which after subjection to the process according to either of claims 12 or 13 form a coherent part.

15. A molded article formed from the expanded polypropylene beads according to any one for claims 1 to 6, 11 or 14, or beads obtained by the process according to any one of claims 7 to 10, having a density in the range from 25 to 150 $g/dm^3$ and a closed cell content of greater than or equal to 80%.

16. The molded article according to claim 15, which is obtained by the process according to either of claims 12 or 13.

17. A use of a polypropylene composition (C) having:

a) a melt flow rate ($MFR_2$), as determined according to ISO 1133 at 230 °C and 2.16 kg load, in the range from 1.5 to 15.0 g/10 min;
b) a melting temperature (Tm), as determined using differential scanning calorimetry according to ISO 11357, in the range from 135 to 158 °C; and
c) a loss tangent (tan $\delta$) at an angular frequency of 0.1 rad/s in dynamic viscoelastic behavior measurement at 200 °C in the range of 2.00 to 4.00;

wherein the polypropylene composition (C) comprises more than 90.0 wt.-%, based on the total weight of the polypropylene composition (C), of a long chain branched copolymer of propylene (c-PP) comprising up to 8.0 wt.-% of comonomer(s) selected from ethylene and $C_4$ to $C_{10}$ alpha olefins
in an extrusion process using a physical blowing agent, wherein the pressure drop rate, as defined in equation (ii), is greater than or equal to 5000 bar/s:

$$pressure\ drop\ rate\ = \frac{pressure\ drop\ \times\ output\ of\ line}{3600\ \times\ \pi\ \times\ melt\ density\ \times\ \#\ of\ holes\ in\ die\ plate\ \times\ r^2\ \times\ land\ length} \quad (ii)$$

wherein the pressure drop is expressed in bar,
the output of line is expressed in kg/h,
the melt density is approximated for all samples as 1000 $kg/m^3$,
the radius (r) of the holes in the die plate is expressed in m and
the land length of the holes in the die plate is expressed in m,
for the production of expanded polypropylene beads having a density in the range from 25 to 150 $g/dm^3$ and a closed cell content of greater than or equal to 80%.

18. A use of expanded polypropylene beads comprising a polypropylene composition (C) having:

a melt flow rate ($MFR_2$), as determined according to ISO 1133 at 230 °C and 2.16 kg load, in the range from 1.5 to 15.0 g/10 min;
a melting temperature (Tm), as determined using differential scanning calorimetry according to ISO 11357, in the range from 135 to 158 °C; and
a loss tangent (tan $\delta$) at an angular frequency of 0.1 rad/s in dynamic viscoelastic behavior measurement at 200 °C in the range of 2.00 to 4.00;
wherein the polypropylene composition (C) comprises more than 90.0 wt.-%, based on the total weight of the polypropylene composition (C), of a long chain branched copolymer of propylene (c-PP) comprising up to 8.0 wt.-% of comonomer(s) selected from ethylene and $C_4$ to $C_{10}$ alpha olefins
in a steam chest molding process, preferably a pressure fill steam chest molding process, using a steam pressure or equal to or less than 4 bar,
for the formation of molded articles having a density in the range from 25 to 150 $g/dm^3$ and a closed cell content of greater than or equal to 80%.

Europäisches
Patentamt

European
Patent Office

Office européen
des brevets

**EUROPEAN SEARCH REPORT**

Application Number

EP 20 16 0024

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/256757 A1 (SASAKI HIDEHIRO [JP] ET AL) 23 December 2004 (2004-12-23) * resin 1, paragraph 104, examples 1-5 & 8 * | 1-18 | INV. C08J9/00 C08K3/26 C08K5/00 |
| A,D | EP 3 489 287 A1 (KANEKA CORP [JP]) 29 May 2019 (2019-05-29) * MP-1 to MP-4 & MP-7 table 1, examples 1-5, 8-10 tables 2-3 * | 1-18 | |
| A | EP 2 818 512 A1 (JAPAN POLYPROPYLENE CORP [JP]) 31 December 2014 (2014-12-31) * X3 table 1, example 6 table 4 * | 1-18 | |

TECHNICAL FIELDS
SEARCHED (IPC)

C08J
C08K
C08L

The present search report has been drawn up for all claims

| Place of search | Date of completion of the search | Examiner |
|---|---|---|
| Munich | 15 April 2020 | Ritter, Nicola |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 20 16 0024

This annex lists the patent family members relating to the patent documents cited in the above-mentioned European search report.
The members are as contained in the European Patent Office EDP file on
The European Patent Office is in no way liable for these particulars which are merely given for the purpose of information.

15-04-2020

| Patent document cited in search report | | Publication date | Patent family member(s) | | Publication date |
|---|---|---|---|---|---|
| US 2004256757 | A1 | 23-12-2004 | AU | 2002341408 A1 | 12-05-2003 |
| | | | CA | 2465664 A1 | 08-05-2003 |
| | | | CN | 1612913 A | 04-05-2005 |
| | | | EP | 1448683 A2 | 25-08-2004 |
| | | | KR | 20050042054 A | 04-05-2005 |
| | | | MX | PA04004175 A | 06-09-2004 |
| | | | TW | I255827 B | 01-06-2006 |
| | | | US | 2004256757 A1 | 23-12-2004 |
| | | | US | 2006116434 A1 | 01-06-2006 |
| | | | WO | 03037971 A2 | 08-05-2003 |
| EP 3489287 | A1 | 29-05-2019 | CN | 109476868 A | 15-03-2019 |
| | | | EP | 3489287 A1 | 29-05-2019 |
| | | | JP | WO2018016399 A1 | 09-05-2019 |
| | | | US | 2019153188 A1 | 23-05-2019 |
| | | | WO | 2018016399 A1 | 25-01-2018 |
| EP 2818512 | A1 | 31-12-2014 | CN | 104169356 A | 26-11-2014 |
| | | | EP | 2818512 A1 | 31-12-2014 |
| | | | JP | 6089765 B2 | 08-03-2017 |
| | | | JP | 2013199644 A | 03-10-2013 |
| | | | US | 2015004394 A1 | 01-01-2015 |
| | | | WO | 2013125702 A1 | 29-08-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 101014002 B1
- US 6315931 B1
- EP 0778310 B1
- EP 3489287 A1
- EP 1853426 B1

### Non-patent literature cited in the description

- **M. H. WAGNER.** Rheotens-Mastercurves and Drawability of Polymer Melts. *Polymer Engineering and Sience,* vol. 36, 925-935
- **SINGH, G. ; KOTHARI, A. ; GUPTA, V.** *Polymer Testing,* 2009, vol. 28 (5), 475
- **ZHOU, Z. ; KUEMMERLE, R. ; QIU, X. ; REDWINE, D. ; CONG, R. ; TAHA, A. ; BAUGH, D. ; WINNIFORD, B.** *J. Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28 (1), 128
- **CHENG, H. N.** *Macromolecules,* 1984, vol. 17, 1950
- **WANG, W.J. ; ZHU, S.** *Macromolecules,* 2000, vol. 33 (1), 157
- **WANG, W-J. ; ZHU, S.** *Macromolecules,* 2000, vol. 33 (1), 157
- **B.H. ZIMM ; W.H. STOCKMEYER.** *J. Chem. Phys.,* 1949, vol. 17, 1301